(19) Europäisches Patentamt
European Patent Office
Office européen des brevets

(11) Veröffentlichungsnummer: 0 130 576 B1

(12) # EUROPÄISCHE PATENTSCHRIFT

(45) Veröffentlichungstag der Patentschrift: 17.01.90

(21) Anmeldenummer: 84107489.1

(22) Anmeldetag: 28.06.84

(51) Int. Cl.[4]: C 08 L 33/12, C 08 J 3/22, C 09 C 3/10, C 09 B 67/20, C 08 K 9/08

(54) **Farbmittelkonzentrate, Acrylatharze als Bindemittel enthaltend.**

(30) Priorität: 02.07.83 DE 3323951

(43) Veröffentlichungstag der Anmeldung: 09.01.85 Patentblatt 85/02

(45) Bekanntmachung des Hinweises auf die Patenterteilung: 17.01.90 Patentblatt 90/03

(84) Bennante Vertragsstaaten: DE FR GB IT NL

(56) Entgegenhaltungen:
EP-A-0 022 746
EP-A-0 027 221
DE-A-2 639 752
GB-A-1 238 164
GB-A-1 282 634
GB-A-1 405 070
GB-A-2 014 157
US-A-3 907 727

(73) Patentinhaber: Röhm GmbH
Kirschenallee Postfach 4242
D-6100 Darmstadt 1 (DE)

(72) Erfinder: Krieg, Manfred, Dr.
Kesselhutweg 19
D-6100 Darmstadt (DE)
Erfinder: Lichtenstein, Hans
Berliner Strasse 36
D-6113 Babenhausen (DE)
Erfinder: Hosch, Ludwig
Fritz-Kredel-Strasse 6
D-6120 Michelstadt (DE)
Erfinder: Ittmann, Günther
Waldstrasse 11
D-6114 Gross-Umstadt (DE)

EP 0 130 576 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBERGRAF, STOCKHOLM 1990

## Beschreibung

### Gebiet der Erfindung

Die Erfindung betrifft Farbmittelkonzentrate, die Acrylatharze als Bindemittel enthalten.

Zur Einfärbung von Kunststoffen stehen der Technik Farbmittel zur Verfügung, die nahezu jede gewünschte Einfärbung ermöglichen.

Kunststoffe werden vorwiegend entweder durch Massefärbung bei der Herstellung der Kunststoffe oder bei der Verarbeitung von Kunststoffpulvern bzw. -granulaten eingefärbt. Das Einfärbeverfahren wird dem jeweiligen Kunststoff angepaßt.

### Stand der Technik

Bei der Einarbeitung der Farbmittel in die Kunststoffmonomeren bzw. Präpolymerisate bedient man sich vorteilhaft bestimmter Farbmittelkonzentrate, die aus den Farbmitteln bzw. Pigmenten zusammen mit Bindemitteln bestehen (sogenannte "Masterbatches"). Auch beim Einfärben von Kunststoffpulvern bzw. -granulaten bedient man sich ähnlicher Techniken.

In der Regel besteht die hauptsächliche Schwierigkeit darin, eine gleichmäßige Verteilung der Pigmente im Pigmentkonzentrat zu erreichen, was wiederum eine Voraussetzung für die gleichmäßige Pigmentverteilung im Kunststoff darstellt. Pigmentagglomerationen in Kunststoffen beeinträchtigen regelmäßig deren mechanische und optische Eigenschaften.

Zahlreiche Druckschriften befassen sich mit der (mechanischen) Verteilung von Farbmitteln in Kunststoffen. Aus der DE-OS-1 248 291 sind Pigmentkonzentrate zum Anfärben von Kunststoffen auf Basis von PVC bekannt, wobei granuliertes PVC zusammen mit feinverteilten Pigmenten und Hilfsstoffen hohen Scherkräften unterworfen wird unterhalb des Schmelzpunktes.

Pigmentmassen zum Färben von thermoplastischen Stoffen erhält man u.a., indem man das feinverteilte Pigment in wäßriger Phase mit einer Emulsion oder Lösung des Trägermaterials unter Bildung einer nicht agglomerierten Mischung vermischt und diese der Sprühtrocknung unterwirft (DE-OS-1 592 897).

Aus der GB-PS-1 148 168 ist die Herstellung bestimmter Typen von festen Farbmittelkonzentraten bekannt, wobei ein Pigment in Pastenform (das durch Elektrolytfällung einer wäßrigen Dispersion gewonnen wurde) und ein unverestertes Rosin enthaltendes Phenolharz (das durch Fällung aus einer wäßrigen Salzlösung hergestellt wurde) gemischt werden. Nach der US-PS-3 471 433 erhält man Masterbatches aus Pigmentdispersionen in Acrylatharzen, wenn man eine starke Säure mit Formamid oder Acetamid mischt, darin das Pigment dispergiert und ein viskoses Acrylpolymer, (beispielsweise ein Acrylnitril-Vinylacetat und Methylvinylpyridin-Copolymerisat) unter Rühren zufügt.

Die Emulsionspolymerisation von Vinylmonomeren wie Butylacrylat/Acrylnitril unter Zusatz von 0,1 - 20 % Monoallylmaleat in der wäßrigen Suspension eines Pigments und anschließende Propfung mit Vinylmonomeren (Styrol/Acrylnitril) ergibt Pigment-Konzentrate, die sich mit Polymeren wie ABS-Harzen zu gleichmäßig eingefärbten Mischungen verarbeiten lassen. (JP-OS-50 092 386).

Durch mechanisches Vermischen von Polymerisaten aus Vinylaromaten, 2-Alkencarbonsäuren bzw. Monoalkylestern von 2-Alkencarbonsäuren und Alkyl(meth)acrylaten im geschmolzenen Zustand mit Pigmenten, Kneten oberhalb 100°C, Abkühlenlassen und Vermahlen erhält man gemäß DE-OS-2 841 540 Farbmittel zur Einarbeitung in plastifiziertes PVC. Gemäß der CSSR-PS-106 877 werden PMMA, Titandioxid und Bleistearat bei ca. 170°C plastifiziert und das so erhaltene Konzentrat in MMA suspendiert. Zur Herstellung gefärbter organischer Gläser wird die Suspension mit einem Präpolymeren gemischt und in einer Form auspolymerisiert.

### Aufgabe

Die Mittel zum Einfärben von Acrylglas in Massefärbung nach dem Stand der Technik konnten nicht allen Anforderungen gerecht werden.

Die Anforderungen richten sich dabei sowohl auf die akute Einarbeitbarkeit der Farbmittelkonzentrate als auch auf die Auswirkungen auf die damit eingefärbten Acrylgläser:

- Die Farbmittelkonzentrate sollen gute Löslichkeit im Monomeren bzw. in Präpolymerisaten aufweisen. Sie sollen ferner den Polymerisationsverlauf und die Entformung nicht beeinträchtigen. Die Pigmente sollen gut in den Polymerisationsansätzen dispergiert sein und vor allem muß der erreichte disperse Zustand der Pigmente hinreichend stabil sein, d.h. es darf keine Sedimentation oder Reagglomerierung der Pigmente stattfinden. Anzustreben ist, daß die mit den Farbmittelkonzentraten hergestellten Dispersionen über einen Zeitraum von Stunden bis Tagen stabil bleiben.
- Die Farbmittel bzw. Pigmente sollen sich mechanisch gut zu einem Farbmittelkonzentrat verarbeiten, beispielsweise zu einem Trockenpigmentkonzentrat dispergieren lassen.
- Die nach Abschluß der Polymerisation anfallenden Verarbeitungsprozesse des Acrylglases wie Tempern, Umformen, Recken etc. sollen nicht negativ beeinflußt werden.

- Die sonstigen mechanischen Eigenschaften der eingefärbten Acrylgläser, die Vicat-Erweichungstemperatur sowie das Bewitterungsverhalten sollen nicht schlechter ausfallen als bei normalem Acrylglas.

**Lösung**

Es wurde gefunden, daß Farbmittelkonzentrate gemäß den Ansprüchen, die bestimmte polymere Bindemittel enthalten, zur Lösung der dargestellten Aufgabe sehr gut geeignet sind. Als Bindemittel enthalten die Farbmittelkonzentrate ein Polymerisat P aus den Komponenten (die sich zu 100 Gew.-% ergänzen)

A) Methylmethacrylat in Anteilen von 70 bis 90 Gew.-% (bezogen auf das Gesamtpolymerisat P)
B) Methylacrylat in Anteilen von 10 bis 20 Gew.-% (bezogen auf das Gesamtpolymerisat P) und
C) 0,1 bis 10 Gew.-% (bezogen auf das Gesamtpolymerisat P) aus einem oder mehreren radikalisch polymerisierbaren Monomeren der Formel I

```
     O  R1
     ||  |
R2 - C - C = CH2                                    I
```

worin $R_1$ für Wasserstoff oder Methyl und $R_2$ für einen eine funktionelle Gruppe aufweisenden Rest, aus einer der folgenden Typen a) bis g)

a) der OH-Gruppe
b) einer $NR_3$-Gruppe, wobei $R_3$ und $R_4$

```
         |
         R4
```

unabhängig voneinander für Wasserstoff, einem gegebenenfalls verzweigten Alkylrest mit 1 bis 6 Kohlenstoffatomen bedeuten oder worin $R_3$ zusammen mit $R_4$ unter Einbeziehung des Stickstoffs und gegebenenfalls zusammen mit weiteren Stickstoff- oder Sauerstoffatomen ein fünf- oder sechsgliedriges heterocyclisches System bilden
c) einer $R'_3R'_4N$ - X - Y-Gruppe, wobei X eine gegebenenfalls verzweigte, gegebenenfalls cyclische Alkylengruppe mit 2 bis insgesamt 10 Kohlenstoffatomen, Y Sauerstoff oder einen Rest $-NR_5-$ bedeutet und $R'_3$ sowie $R'_4$ die gleichen Bedeutungen wie $R_3$ und $R_4$ besitzen und $R_5$ für Wasserstoff oder einen Alkylrest mit 1 bis 6 Kohlenstoffatomen steht oder
d) einer Gruppe HO - X' - Y', wobei X' und Y' die gleichen Bedeutungen wie X und Y besitzen
e) einer Gruppe

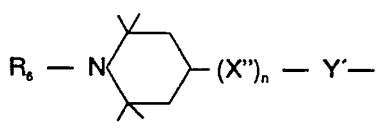

wobei X" und Y" die gleichen Bedeutungen wie X und Y besitzen, n für null oder eins und $R_6$ für Wasserstoff oder einen Alkylrest mit 1 bis 6 Kohlenstoffatomen steht
f) einer Gruppe $(R_7O)_3$ - Si - X"' - Y"', worin $R_7$ einen Alkylrest mit 1 bis 6 Kohlenstoffatomen bedeutet und X"' sowie Y"' die gleichen Bedeutungen wie X und Y besitzen
g) einer Gruppe

```
          H
          |
   H2C - C - CH2 - O -
      \ /
       O
```

darstellen.

Die polymeren Bindemittel lassen sich sehr gut zusammen mit den an sich bekannten Pigmenten, beispielsweise über ein Walz- und Knetaggregat zu einem Trockenpigmentkonzentrat dispergieren. Das Basispolymerisat ist dabei zu überwiegenden Anteilen aus Methylmethacrylat und daneben aus Methylacrylat und der Komponente C aufgebaut. Zwar lassen sich mit Polymerisaten dieses Typs im Gewichtsverhältnis 6 : 1 bis 3,3 : 1 Präparationen mit befriedigendem Dispergiergrad des bzw. der Pigmente erzielen (wobei in allererster Linie die Scherenergie im Dispergieraggregat verantwortlich ist).

Eine ausreichende Stabilität ist gegeben, wenn zu den Komponenten A) und B) mindestens eine weitere aus

den Monomeren C) in Mengen von mindestens 0,1 Gew.-% und bis 10 Gew.-%, speziell 1 - 6 Gew.-%, bezogen auf das Polymerisat P, hinzugefügt wird. Als eine mögliche Modellvorstellung kann gelten, daß die Bindemittelmoleküle über funktionelle Gruppen in ausreichender Zahl an der Pigmentoberfläche adsorbiert werden und dadurch eine stabilisierende Hülle um das Pigmentteilchen aufbauen. Die Hülle verhindert die Flokkulation der Pigmentteilchen. Hinsichtlich der Pigmente bzw. Farbstoffe vgl. R. Vieweg & F. Esser, Kunststoff-Handbuch, Band IX, C. Hanser Verlag, München, 1975.

Besonders bevorzugt ist die Zugabe stickstoffhaltiger Monomerer vom Typ Cc) und Cb). Von besonderem Vorteil ist die Anwesenheit von Monomeren vom Typ Cc), die eine Verzweigung in der Alkylenkette X aufweisen, insbesondere, die ein tertiäres C-Atom in der Alkylenkette besitzen, genannt seien z. B. Verbindungen in denen X für 2,2-Dimethylpropyl steht, insbesondere das 3-Dialkylamino-2,2-dimethylpropyl-1methacrylat, speziell die 3-Dimethylamino- und die 3-Diethylaminoverbindung. Die diese Monomere enthaltenden Mittel zeichnen sich u.a. durch weitgehend problemlose Handhabbarkeit, insbesondere auch bei der Entformung aus und erfüllen insgesamt die vorstehend dargestellten Anforderungen der Technik in besonders hohem Maße.

Ferner bewährt haben sich polymere Bindemittel, bei denen die Komponente Cc) aus mindestens einem der Monomeren

2-Dimethylaminoethylacrylat- und/oder -methacrylat
2-Diethylaminoethylacrylat- und/oder -methacrylat
2-Dimethylaminopropylacrylat und/oder -methacrylat
2-Diethylaminopropylacrylat- und/oder -methacrylat

besteht bzw. diese enthält.

Vorteilhaft ist weiter noch die Kombination mit einem oder mehreren hydroxy-gruppenhaltigen Monomeren, beispielsweise vom Typ Cd) oder Ca). Als ein Anhalt seien die Gewichtsverhältnisse A) zu B) zu C) als 4,2 ± 0,7) zu 1 zu (0,3 ± 0,2) angegeben. Die Polymerisate P besitzen im allgemeinen eine Viskosität $\eta_{spez/c}$ von 10 bis 70, vorzugsweise von 15 bis 30 ml/g in $CHCl_3$ bei 20°C. Die Bestimmung der Viskosität wird nach DIN 1342 im Micro-Übbelohde-Viscosimeter vorgenommen.

**Verwendung der polymeren Bindemittel**

Die zur Herstellung der Farbmittelkonzentrate aus den beschriebenen Bindemitteln verwendeten Farbmittel sind die auch zur Einfärbung der Polymerisate geeigneten Farbmittel, d.h. sowohl anorganische als organische Farbstoffe und Pigmente. Sie können - im Zuschnitt auf die spezifischen einzufärbenden Polymerisate - dem Stand der Technik entnommen werden (vgl. Vieweg-Esser, Kunststoff-Handbuch, Band IX, 'Polymethacrylate', C. Hansen Verlag 1975).

Besonders genannt seien z. B. Pigmentruß, Gelb- und Rotpigmente auf Cadmiumsulfid- und Selenidbasis, Phthalocyaninblau und -grün.

Die Konzentration der Farbmittel in den Bindemitteln liegt im allgemeinen bei 10 bis 70 Gew.-%, vorzugsweise bei 30 bis 60 Gew.-%. Die Einarbeitung der Farbmittel in die Bindemittel kann unter Anwendung genügend hoher Scherkräfte in an sich bekannter Weise durchgeführt werden. Als Dispergieraggregate kommen z. B. Kneter, Walzenstühle u.ä. infrage.

Der Anteil der "Masterbatches" (farbmittelhaltigen polymeren Bindemittel) am Gesamtansatz (bestehend i.a. aus Monomeren, vorzugsweise Präpolymerisat, Bindemittel und gegebenenfalls Hilfsstoffen) beträgt in der Regel zwischen 0,05 und 3 Gew.-%, vorzugsweise 0,1 bis 1,5 Gew.-%. Das Einbringen in die zur Polymerisation der Acryl- bzw. Methacrylharze (Matrixpolymere) gemäß dem Stand der Technik verwendeten Vorstufen wie Sirupe, Präpolymerisate und/oder Monomeren, kann in üblicher Weise, beispielsweise durch Einrühren vorgenommen werden.

Die anschließenden Schritte, beispielsweise das Verfüllen des Sirups in formgebende Polymerisationskammern und der nachfolgende Polymerisationsschritt können dann analog den Verfahren des Standes der Technik vorgenommen werden, ebenfalls die Entformung.

Die polymeren Bindemittel sind - wie bereits erwähnt - zur Einarbeitung vorwiegend in Acrylharze geeignet, die in Substanzpolymerisation hergestellt werden. In erster Linie ist an Material für geformte Körper in den Anwendungsbereichen:

Technik, Sanitärbereich und Haushalt zu denken, d.h. Kunststoffharze, die sich gegebenenfalls durch Unlöslichkeit in üblichen Lösungsmitteln sowie durch günstige mechanische Eigenschaften auszeichnen.

Derartige Acrylharze (Matrixpolymeren) sind in der Regel ganz oder zu wesentlichen Teilen aus Estern der Acryl- und der Methacrylsäure, insbesondere Methylmethacrylat (MMA) als Monomeren, gegebenenfalls neben noch aus anderen copolymerisierbaren Monomeren, aufgebaut.

Die Matrixpolymeren auf der Basis von Methylmethacrylat können z. B. noch Anteile von 0 bis etwa 45 Gew.-% an weiteren Comonomeren enthalten.

Genannt seien andere Ester der Methacrylsäure bzw. Acrylsäure, wie z.B. der Acrylsäuremethylester, Acrylsäurebutylester, α-Chloracrylsäuremethylester, Methacrylsäureäthylester; weiter (gegebenenfalls substituierte) Amide der Acryl- bzw. Methacrylsäure, wie Acrylamid und Methacrylamid, Methylolmethacrylamid und -acrylamid. Ferner Acrylnitril, Styrol und Derivate desselben, wie α-Methylstyrol, Vinylester von Carbonsäuren, wie Vinylacetat.

Besonders erwähnt sei die Anwesenheit von vernetzenden Monomeren, wie Äthylenglykoldimethacrylat, 1,4-Butandioldimethacrylat, Triglykoldimethacrylat, Trimethylolpropantrimethacrylat oder Allylverbindungen, wie z. B. Allylmethacrylat, Triallylcyanurat oder Triallylisocyanurat.

Die Durchführung der Polymerisation kann in an sich bekannter Weise unter Verwendung der Erfahrungen der Technik durchgeführt werden (vgl. H. Rauch-Puntigam und Th. Völker in "Acryl- und Methacrylverbindungen", Springer-Verlag 1967 und J. Brandrup - E.H. Immergut, Polymer-Handbook, 2nd Edition, Wiley-Interscience (1975). Entsprechende Techniken sind bereits in der DE-PS-639 095 in den Grundzügen beschrieben worden.

**Herstellung der Polymerisate**

Das Matrixpolymerisat

Als Initiatoren für die radikalische Polymerisation der Monomeren (wie den Acrylmonomeren, Styrol und Derivaten, Estern von Vinylverbindungen), können beispielsweise Peroxyd- oder Azoverbindungen in den üblichen Mengen verwendet werden. Zur Steuerung des Molgewichts eignen sich die bekannten Regler in den an sich bekannten Konzentrationen. Genannt seien z. B. organische Schwefelverbindungen. Polymerisationsgrad und damit das Molekulargewicht der entstehenden Harzmoleküle läßt sich bekanntlich durch die Initiatorkonzentration oder/und Reglerkonzentration einstellen. So wird man bei der Polymerisation von Acrylharzen in der Regel 0,01 bis 1,0 Gew.-% an Initiator verwenden. Der Zusatz an Regler liegt im allgemeinen zwischen 0,01 und 0,5 Gew.-%, vorzugsweise zwischen 0,05 und 0,2 Gew.-%. Im allgemeinen liegen die Molgewichte ($\bar{M}w$) der Matrixpolymerisate im Bereich $2 \cdot 10^5$ bis $5 \cdot 10^6$. In der Mehrzahl der Fälle ist das Matrixpolymerisat schwach vernetzt. Die Vicat-Erweichungstemperatur (nach DIN 53 460, Verfahren B) liegt in der Regel bei >100°C. Weiter können die Polymerisationsansätze noch die an sich bekannten Hilfsstoffe, wie UV-Absorber, Weichmacher, Licht- u. Thermostabilisatoren, Antioxidantien und Flammschutzmittel enthalten.

**Das polymere Bindemittel**

kann ebenfalls in enger Anlehnung an die Polymerisationsverfahren des Standes der Technik hergestellt werden. (Siehe vorstehend "Das Matrixpolymerisat).

Beispielsweise kann die Polymerisation mit Vorteil in Folienbeuteln (gemäß BE-PS-695 342) durchgeführt werden. Die Polymerisation wird im allgemeinen durch Radikalbildner ausgelöst, vorzugsweise durch Peroxid- oder Azoverbindungen in den üblichen Mengen (meist zwischen 0,02 und 0,1 Gew.-%, bezogen auf die Monomeren). Auch die bekannten Redoxsysteme, Beschleuniger usw. können mit Vorteil Anwendung finden (vgl. H. Rauch-Puntigam "Acryl- und Methacrylverbindungen", Springer-Verlag 1967). Zur Steuerung des Molgewichts eignen sich auch hier die bekannten Regler, z. B. Schwefelregler in den an sich bekannten Konzentrationen. Der Zusatz an Regler liegt im allgemeinen zwischen 0,01 und 0,5 Gew.-%, vorzugsweise zwischen 0,05 und 0,2 Gew.-%.

Im Falle des aus den Komponenten A), B) und C) aufgebauten Polymerisats P werden vorteilhaft die Komponenten zusammen mit den Hilfsstoffen, Weichmachern (gegebenenfalls Gleitmitteln) usw. intensiv gemischt (gerührt) und in einem Beutel aus geeignetem Plastikmaterial, beispielsweise aus einem Polyethylenterephthalat-Copolymerisat bei einer Schichtdicke im Bereich von einigen Zentimetern und bei erhöhter Temperatur, beispielsweise ca. 50 ± 10°C (Wasserbad) über einen hinreichend langen Zeitraum, der im Bereich von bis zu 2 Tagen liegen kann (Richtwert 24 Stunden) polymerisiert. Zur Endpolymerisation wird vorteilhafterweise nochmals die Temperatur angehoben, beispielsweise auf ca. 100°C. (Richtwert ca. 16 Stunden).

Das erhaltene Polymerisat P wird entformt und zweckmäßigerweise zerkleinert, beispielsweise durch Mahlen auf die zur weiteren Verarbeitung geeignete Teilchengröße.

Zur Herstellung einer Trockenpigment-Präparation sei beispielsweise als Richtwert eine durchschnittliche Teilchengröße von ca. 1 mm genannt. Als Richtwert für das Molgewicht des Polymerisats P sei - in diesem Falle ein Wert von 40 000 ± 15 000 genannt.

**Herstellung einer Trockenpigment-Präparation**

Aus den Bindemitteln können die Trockenpigmentpräparationen in Anlehnung an bekannte Verfahren hergestellt werden.

Das Polymerisat P, vorzugsweise in gemahlener Form, und das Pigment werden in einer geeigneten Mischvorrichtung, beispielsweise einem Trommelmischer intensiv gemischt. Anschließend wird die Pigment-Polymerisat-Mischung auf ein geeignetes Walzaggregat, z. B. einem Zweiwalzenstuhl, gegeben und in der Regel bei erhöhter Temperatur, beispielsweise bei 90 - 100°C gewalzt oder in einem Kneter, z. B. einem ZSK-Kneter, oder auch einem Stempelkneter dispergiert. Nachdem das Polymerisat-Pigment-Gemisch in den thermoplastischen Bereich übergegangen und das Pigment vollkommen eingeschlossen ist, wird das Gemisch vorzugsweise noch einmal gewalzt. Danach zieht man das Masterbatch-Fell ab, läßt abkühlen und mahlt bis zu pulvriger Konsistenz.

**Herstellung einer eingefärbten Acrylglasscheibe**

Auch hier kann in Anlehnung an die Verfahrensweisen des Standes der Technik verfahren werden. Man geht z. B. vorteilhafterweise von einem Acrylat-Präpolymerisat aus, das mit den üblichen Polymerisationshilfsmitteln versetzt wurde. Man trägt dann die erfindungsgemäß gewonnene Trockenpigment-Präparation in den Ansatz ein, sorgt für intensive Mischung, z. B. mit Hilfe eines Rühraggregats, läßt vorzugsweise noch einige Zeit stehen, und füllt in die Polymerisationskammer ein. Man polymerisiert in üblicher Weise, wobei sich meist eine Endpolymerisation bei erhöhter Temperatur anschließt; beispielsweise im Temperschrank bei ca. 120°C. Nach dem Entformen erhält man eingefärbte Acrylglasplatten mit optimaler Pigmentverteilung, die nach dem Erhitzen auf Umformtemperatur und auch nach dem Recken einwandfreie Oberflächen aufweisen.

**Vorteilhafte Wirkungen**

Die erfindungsgemäßen Bindemittel erfüllen die es dargestellten Forderungen der Technik in weitgehendem Maße.

Die Farbmittelkonzentrate lösen sich gut in den Monomeren bzw. Präpolymerisaten. Ihr Zusatz beeinträchtigt den Polymerisationsverlauf nicht. Sie bieten insbesondere bei der Entformung erhebliche Vorteile gegenüber dem Stand der Technik. So läßt sich z. B. der gefürchtete Glasbruch beim Entformen reduzieren bzw. völlig vermeiden. Positiv ist auch die relative Stabilität des dispersen Zustands zu bewerten.

Die nach Abschluß des Polymerisationsvorgangs anfallenden Verarbeitungsprozesse wie Tempern, Umformen und Recken lassen sich gut durchführen.

Die mechanischen und optischen Eigenschaften der eingefärbten Acrylgläser, die Vicat-Erweichungstemperatur sowie das Bewitterungsverhalten, sind gegenüber normalem Acrylglas nicht beeinträchtigt.

**Beispiele**

Die folgenden Beispiele dienen zur Erläuterung der Erfindung.

**Beispiel 1**

**Herstellung eines polymeren Bindemittels für eine Trockenpigment-Präparation (enthaltend Komponenten A) und B)**

828 g Methylmethacrylat
150 g Methylacrylat
2 g Dilauroylperoxid
20 g 2-Äthyl-Hexylthioglykolat

Der Ansatz wird intensiv gerührt und in einem Plastik-Beutel aus Polyäthylenterephthalat-Copolymerisat bei einer Schichtdicke von 1 - 2 cm im Wasserbad bei ca. 50°C 25 Stunden polymerisiert. Die Endpolymerisation beträgt 10 Stunden bei 100°C. Man erhält ein farbloses, klares Polymerisat nach dem Entformen, das durch Mahlen auf eine mittlere Teilchengröße von ca. $<1$ mm zerkleinert wird.

Das Mol-Gewicht beträgt: ca. 40 000 $\eta_{spez./c} = 20 \pm 2$ $cm^3$ /g).

**Beispiel 2**

**Herstellung einer Trockenpigment-Präparation**

200 g des polymeren Bindemittels aus Beispiel 1, gemahlen
200 g Cadmiumsulfid /selenid

werden in einem Taumelmischer intensiv gemischt. Ein Zweiwalzenstuhl wird auf 90 - 100°C aufgeheizt und die Pigment-Polymer-Mischung auf den Walzenstuhl aufgegeben und gewalzt. (Die Dispergierung kann wahlweise auch in einem ZSK-Kneter bzw. auch in einem Stempelkneter erfolgen).

Nachdem das Polymerisat-Pigmentgemisch in den thermoplastischen Bereich übergegangen und das Pigment vollkommen eingeschlossen ist, wird die Mischung auf der Walze noch 10 - 15 Min. gewalzt. Danach wird das Masterbatch- Fell abgezogen und abkühlen gelassen.

Das Walzfell wird zu einem Pulver von ca. 1 mm Durchmesser gemahlen.

**Beispiel 3**

**Herstellung einer roten Acrylglasscheibe**

**Ansatz:**
984 g Präpolymeres Methylmethacrylat (ca. 1000 mPas)
10 g Trockenpigment-Präparation (rot - hergestellt nach Beispiel 2)
5 g Triallylcyanurat
1 g 2,2-Azobis-(isobutyronitril)

In den zunächst farblosen Ansatz wird unter Rühren die Trockenpigment-Präparation eingetragen und an einem Rühraggregat 2 Stunden intensiv gerührt, anschließend 15 Min. stehen gelassen; danach in eine 3 mm distanzierte Silikatglaskammer gefüllt und 15 Stunden bei 45°C im Wasserbad polymerisiert. Die Endpolymerisation erfolgt in einem Temperschrank bei 120°C.

Nach dem Abkühlen und Entformen wird eine undurchsichtige, rote Acrylglasplatte mit optimaler Pigmentverteilung erhalten, die nach Erhitzen auf Verformungstemperatur und nach dem Recken eine einwandfreie Oberfläche aufweist.

**Beispiel 4**

**Herstellung eines polymeren Bindemittels (enthaltend Komponenten A), B) und C)**

673 g Methylmethacrylat
200 g Methylacrylat
1 g 2,2'-Azobis-(isobutyronitril)
72 g 2-Hydroxyäthylmethacrylat
29 g 2-Dimethylaminoäthylmethacrylat
25 g Dodecylmercaptan

Die Herstellung erfolgt analog dem Beispiel 1.

**Beispiel 5**

**Herstellung einer braunen Trockenpigment-Präparation (nach Beispiel 2)**

242 g des polymeren Bindemittels, hergestellt nach Beispiel 4, gemahlen
150 g Titandioxid
43 g Cadmiumselenid
10 g ß-Phthalocyaninblau
39 g Eisenoxidrat

werden, wie im Beispiel 2 beschrieben, verarbeitet.

**Beispiel 6**

**Herstellung einer dunkelbraunen Acrylglasscheibe**

**Ansatz:**
993,2 g präpolymeres Methylmethacrylat (ca. 1000 mPas)
5,0 g Braunpigmentpräparation nach Beispiel 5
0,1 g Glykoldimethacrylat
1,0 g 2,2-Azobis-(isobutyronitril)
0,5 g Bis-2,2,6,6-Tetramethyl-4-piperidylsebacat
0,2 g Gleitmittel auf Lecithinbasis

Die Herstellung erfolgt - wie in Beispiel 3 beschrieben. Erhalten wird eine braune Acrylglasplatte mit optimaler Pigmentverteilung, die gegenüber der in Beispiel 3 hergestellten Scheibe eine noch homogenere Oberfläche und noch gleichmäßigeres Aussehen aufweist. Die erfindungsgemäßen Präparationen gemäß Beispiel 5 ermöglichen es somit, Pigmente mit unterschiedlichen Teilchengrößen, Teilchenformen und -dichten, sowie unterschiedlicher Korngrößenverteilung in eine homogene Verteilung innerhalb der PMMA-Platte zu bringen.

**Beispiel 7**

wird analog Beispiel 4 ausgeführt

**Ansatz:**
724 g Methylmethacrylat
200 g Methylacrylat
50 g 3-Dimethylamino-2,2-dimethylpropyl-1-methacrylat
25 g Dodecylmercaptan
1 g 2,2-Azobis-(isobutyronitril)

**Beispiel 8**

**Ansatz:**
242 g des polymeren Bindemittels gemäß Beispiel 7 (gemahlen)
242 g Titandioxid

werden wie in Beispiel 2 beschrieben verarbeitet.

**Beispiel 9**

**Herstellung einer weißen Acrylglasscheibe**

**Ansatz:**
989 g präpolymerisiertes Methylmethacrylat (ca. 1000 mPas)
10 g Weißpigmentpräparation aus Beispiel 8
0,1 g Glykoldimethacrylat
1,0 g 2,2-Azobis-(isobutyronitril)

Die Herstellung erfolgt wie in Beispiel 3 beschrieben.

**Beispiel 11**

**Herstellung eines polymeren Bindemittels mit den Komponenten A), B) und C)**

**Ansatz:**
674 g Methylmethacrylat
200 g Methylacrylat
100 g 2,2,6,6-Tetramethyl-piperidyl-4-methacrylat
25 g Dodecylmerkaptan
1 g 2,2-Azobisisobuttersäurenitril

Die Durchführung geschieht analog Beispiel 1.

**Beispiel 12**

**Herstellung eines polymeren Bindemittels mit den Komponenten A), B) und C)**

**Ansatz:**
769 g Methylmethacrylat
200 g Methylacrylat
20 g N-Isopropylmethacrylamid
10 g Thioglykol
2 g 2,2-Azobis-isobutyronitril

Die Durchführung geschieht analog Beispiel 1.

**Beispiel 13**

**Herstellung eines polymeren Bindemittels mit den Komponenten A), B) und C)**

**Ansatz:**
769 g Methylmethacrylat
200 g Methylacrylat
20 g α-Methacryl-oxypropyl-trimethoxysilan
10 g Thioglykol
1 g 2,2-Azobis-isobutyronitril

Die Durchführung geschieht analog Beispiel 1.

**Beispiel 14**

**Herstellung eines polymeren Bindemittels mit den Komponenten A), B) und C)**

**Ansatz:**
739 g Methylmethacrylat
200 g Methylacrylat
50 g Glycidylmethacrylat
10 g Thioglykol
1 g 2,2-Azobis-isobutyronitril

Die Durchführung geschieht analog Beispiel 1.

**Patentansprüche**

1. Farbmittelkonzentrat zum Einfärben von Kunststoffen enthaltend ein in einem polymeren Bindemittel dispergiertes Farbmittel, dadurch gekennzeichnet, daß das polymere Bindemittel ein Polymerisat P aus den Komponenten (die sich zu 100 Gew.-% ergänzen)

A) Methylmethacrylat in Anteilen von 70 bis 90 Gew.-% (bezogen auf das Gesamtpolymerisat P)
B) Methylacrylat in Anteilen von 10 bis 20 Gew.-% (bezogen auf das Gesamtpolymerisat P) und
C) 0,1 bis 10 Gew.-% (bezogen auf das Gesamtpolymerisat P) aus einem oder mehreren radikalisch polymerisierbaren Monomeren der Formel I

$$R_2-\overset{\overset{\displaystyle O}{\|}}{C}-\overset{\overset{\displaystyle R_1}{|}}{C}=CH_2 \qquad I,$$

worin $R_1$ für Wasserstoff oder Methyl und $R_2$ für einen eine funktionelle Gruppe aufweisenden Rest, aus einer der folgenden Typen a) bis g)

a) der OH-Gruppe
b) einer $\underset{\underset{\displaystyle R_4}{|}}{N}R_3$-Gruppe, wobei $R_3$ und $R_4$ unabhängig voneinander für Wasserstoff, einem gegebenenfalls verzweigten Alkylrest mit 1 bis 6 Kohlenstoffatomen bedeuten oder worin $R_3$ zusammen mit $R_4$ unter Einbeziehung des Stickstoffs und gegebenenfalls zusammen mit weiteren Stickstoff- oder Sauerstoffatomen ein fünf- oder sechsgliedriges heterocyclisches System bilden
c) einer $R'_3R'_4N$ - X - Y-Gruppe, wobei X eine gegebenenfalls verzweigte, gegebenenfalls cyclische Alkylengruppe mit 2 bis insgesamt 10 Kohlenstoffatomen, Y Sauerstoff oder einen Rest $-NR_5-$ bedeutet und $R'_3$ sowie $R'_4$ die gleichen Bedeutungen wie $R_3$ und $R_4$ besitzen und $R_5$ für Wasserstoff oder einen Alkylrest mit 1 bis 6 Kohlenstoffatomen steht oder
d) einer Gruppe HO - X' - Y', wobei X' und Y' die gleichen Bedeutungen wie X und Y besitzen
e) einer Gruppe

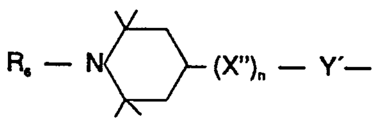

wobei X" und Y" die gleichen Bedeutungen wie X und Y besitzen, n für null oder eins und $R_6$ für Wasserstoff oder einen Alkylrest mit 1 bis 6 Kohlenstoffatomen steht

f) einer Gruppe $(R_7O)_3$ - Si - X‴ - Y‴, worin $R_7$ einen Alkylrest mit 1 bis 6 Kohlenstoffatomen bedeutet und X‴ sowie Y‴ die gleichen Bedeutungen wie X und Y besitzen

g) einer Gruppe

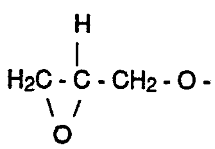

darstellen.

2. Farbmittelkonzentrat gemäß Anspruch 1, dadurch gekennzeichnet, daß das aus den Komponenten A), B) und gegebenenfalls C) aufgebaute Polymerisat P eine Viskosität $\eta_{sp/c}$ von 10 - 70 ml/g aufweist gemessen nach DIN 1342 bei 20°C in $CHCl_3$ mit dem Micro-Übbelohde-Viscosimeter.

3. Farbmittelkonzentrat gemäß den Ansprüchen 1 und 2, dadurch gekennzeichnet, daß das Polymerisat außer aus den Komponenten A) und B) noch aus der Komponente Cc) oder/und der Komponente Cd) aufgebaut ist.

4. Farbmittelkonzentrat gemäß Ansprüchen 1 bis 3, dadurch gekennzeichnet, daß das Polymerisat außer aus den Hauptkomponenten A) und B) noch aus der Komponente Cc) aufgebaut ist, wobei X für eine verzweigte, ein tertiäres Kohlenstoffatom aufweisende Alkylengruppe mit 2 bis insgesamt 10 Kohlenstoffatomen steht.

5. Farbmittelkonzentrat gemäß den Ansprüchen 3 und 4, dadurch gekennzeichnet, daß in den Komponenten Cc) und Cd) der Rest X bzw. X' für eine $C_2$ oder $C_3$-Alkylkette steht.

6. Farbmittelkonzentrat gemäß den Ansprüchen 3 bis 5, dadurch gekennzeichnet, daß X für die 2,2-Dimethylpropyl-Kette steht.

7. Farbmittelkonzentrat gemäß den Ansprüchen 3 bis 6, dadurch gekennzeichnet, daß in den Komponenten Cc) und Cd) der Rest Y bzw. Y' für Sauerstoff steht.

8. Farbmittelkonzentrat gemäß den Ansprüchen 1 bis 5, dadurch gekennzeichnet, daß die Komponenten A) und B) im Gewichtsverhältnis 6 : 1 bis 3,3 : 1 stehen.

9. Farbmittelkonzentrat gemäß den Ansprüchen 1 bis 6, dadurch gekennzeichnet, daß die Komponenten A), B) und C) im Gewichtsverhältnis (4,2 ± 0,7) : 1 : (0,3 ± 0,2) stehen.

10. Farbmittelkonzentrat gemäß den Ansprüchen 1 bis 8, dadurch gekennzeichnet, daß die Komponente C) zu 1 bis 6 Gew.-% (bezogen auf das Gesamtpolymerisat P) vorhanden ist.

**Claims**

1. Dyestuff concentrate for colouring plastics containing a dyestuff dispersed in a polymeric binder, characterised in that the polymeric binder is a polymer P consisting of the following components (which together make up 100 % by weight):

A) methylmethacrylate in amounts of from 70 to 90 % by weight (based on the total polymer P)
B) methylacrylate in amounts of from 10 to 20 % by weight (based on the total polymer P)
C) 0.1 to 10 % by weight (based on the total polymer P) of one or more radically polymerisable monomers of formula I

```
     O   R1
     ||  |
R2 - C - C - =CH2                I,
```

wherein $R_1$ represents hydrogen or methyl and $R_2$ represents a radical containing a functional group, of one of the following types a) to g)

a) the OH group

b) an $NR_3$ group, wherein $R_3$ and $R_4$ independently

```
   |
   R4
```

represent hydrogen, an optionally branched $C_{1-6}$ alkyl group or wherein $R_3$ together with $R_4$ and including the nitrogen and optionally other nitrogen or oxygen atoms form a five- or sixmembered heterocyclic system

c) an $R'_3R'_4N$ - X - Y group wherein X represents an optionally branched, optionally cyclic alkylene group with from 2 up to 10 carbon atoms, Y represents oxygen or a group $-NR_5-$ and $R'_3$ and $R'_4$ have the same meanings as $R_3$ and $R_4$ and $R_5$ represents hydrogen or a $C_{1-6}$ alkyl group or

d) a group HO - X' - Y', wherein X' and Y' have the same meanings as X and Y

e) a group

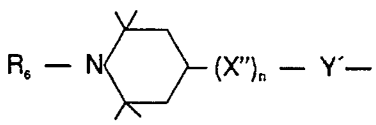

wherein X" and Y" have the same meanings as X and Y, n represents zero or one and $R_6$ represents hydrogen or a $C_{1-6}$ alkyl group

f) a group $(R_7O)_3$ - Si - X‴ - Y‴ wherein $R_7$ represents a $C_{1-6}$ alkyl group and X‴ and Y‴ have the same meanings as X and Y

g) a group

```
      H
      |
H2C - C - CH2 - O
   \ /
    O
```

2. Dyestuff concentrate according to claim 1, characterised in that the polymer P synthesised from A), B) and C) has a viscosity $\eta_{sp/c}$ of 10 to 70 ml/g, measured according to DIN 1342 at 20°C in $CHCl_3$ using the Micro-Ubbelohde viscosimeter.

3. Dyestuff concentrate according to claims 1 and 2, characterised in that the polymer is made up of not only components A) and B) but also component Cc) and/or component Cd).

4. Dyestuff concentrate according to claims 1 to 3, characterised in that the polymer is made up not only of the main components A) and B) but also the component Cc), wherein X represents a branched alkylene group with 2 to a total of 10 carbon atoms and containing a tertiary carbon atom.

5. Dyestuff concentrate according to claims 3 and 4, characterised in that, in components Cc) and Cd), the group X or X' represents a $C_2$ or $C_3$-alkyl chain.

6. Dyestuff concentrate according to claims 3 to 5, characterised in that X represents the 2,2-dimethylpropyl chain.

7. Dyestuff concentrate according to claims 3 to 6, characterised in that, in components Cc) and Cd), the group Y or Y' represents oxygen.

8. Dyestuff concentrate according to claims 1 to 5, characterised in that components A) and B) are present in a ratio by weight of 6 : 1 to 3.3 : 1.

9. Dyestuff concentrate according to claims 1 to 6, characterised in that components A), B) and C) are present in a ratio by weight of (4.2 ± 0.7) : 1 : (0.3 ± 0.2).

10. Dyestuff concentrate according to claims 1 to 8, characterised in that component C) is present in amounts of from 1 to 6 % by weight (based on the total polymer P).

## Revendications

1. Concentré colorant pour la coloration de matières plastiques, contenant un colorant dispersé dans un liant polymère, caractérisé en ce que le liant polymère est un polymère P, constitué des composants suivants (dont la somme globale est de 100 % en poids):

A) méthacrylate de méthyle, en des pourcentages de 70 à 90 % en poids (par rapport au polymère total P)
B) acrylate de méthyle, en des pourcentages de 10 à 20 % en poids (par rapport au polymère total P) et
C) de 0,1 à 10 % en poids (par rapport au polymère total P) d'un ou plusieurs monomères polymérisables par polymérisation radicalaire de formule I

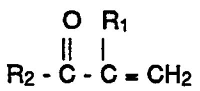
I,

dans laquelle $R_1$ représente un hydrogène ou le radical méthyle, et $R_2$ représente un radical comportant un groupe fonctionnel, appartenant à l'un des types a) à g) suivant:

a) le groupe OH,
b) un groupe $NR_3$, dans lequel $R_3$ et $R_4$, indépendamment
|
$R_4$
l'un de l'autre, représentent chacun un hydrogène, un radical alkyle éventuellement ramifié ayant de 1 à 6 atomes de carbone, ou encore où $R_3$, avec $R_4$, forment avec l'azote, et éventuellement avec d'autres atomes d'azote ou d'oxygène, un système hétérocyclique à 5 ou 6 chaînons,
c) un groupe $R'_3R'_4N - X - Y$, où X représente un groupe alkylène éventuellement ramifié, éventuellement cyclique, ayant un nombre d'atomes de carbone compris entre 2 et un total de 10, Y est un oxygène ou un radical $-NR_5-$, et les radicaux $R'_3$ et $R'_4$ ont les mêmes significations que $R_3$ et $R_4$, et $R_5$ représente un hydrogène ou un radical alkyle ayant de 1 à 6 atomes de carbone, ou
d) un groupe HO - X' - Y', où X' et Y' ont les mêmes significations que X et Y,
e) un groupe

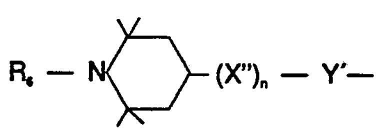

où X" et Y" ont les mêmes significations que X et Y, n vaut 0 ou 1, et $R_6$ est un hydrogène ou un radical alkyle ayant de 1 à 6 atomes de carbone,
f) un groupe $(R_7O)_3$ - Si- X'''- Y''', où $R_7$ est un groupe alkyle ayant de 1 à 6 atomes de carbone, et les radicaux X''' et Y''' ont les mêmes significations que X et Y,
g) un groupe

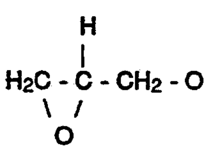

2. Concentré colorant selon la revendication 1, caractérisé en ce que le polymère P, constitué des composants A), B) et éventuellement C), présente une viscosité $\eta_{sp/c}$ de 10 - 70 ml/g, mesurée selon DIN 1342 à 20°C dans du $CHCl_3$ à l'aide d'un micro-viscosimètre de Übbelohde.

3. Concentré colorant selon les revendications 1 et 2, caractérisé en ce que le polymère est constitué, outre des composants A) et B), du composant Cc) et/ou du composant Cd).

4. Concentré colorant selon les revendications 1 à 3, caractérisé en ce que le polymère est constitué, outre des constituants principaux A) et B), du composant Cc), dans lequel X représente un groupe alkylène ramifié, comportant un atome de carbone tertiaire et ayant un nombre de carbone compris entre 2 et un total de 10.

5. Concentré colorant selon les revendications 3 et 4, caractérisé en ce que, dans les composants Cc) et Cd), le radical X ou X' représente une chaîne alkyle en $C_2$ ou $C_3$.

6. Concentré colorant selon les revendications 3 à 5, caractérisé en ce que X représente une chaîne 2,2-diméthylpropyle.

7. Concentré colorant selon les revendications 3 à 6, caractérisé en ce que, dans les composants Cc) et Cd), le radical Y ou Y' représente un oxygène.

8. Concentré colorant selon les revendications 1 à 5, caractérisé en ce que les composants A) et B) présentent entre eux un rapport pondéral de 6 : 1 à 3,3 : 1.

9. Concentre colorant selon les revendications 1 à 6, caractérisé en ce que les composants A), B) et C) présentent entre eux la proportion pondérale (4,2 ± 0,7) : 1 : (0,3 ± 0,2).

10. Concentré colorant selon les revendications 1 à 8, caractérisé en ce que le composant C) est présent en une quantité de 1 à 6 % en poids (par rapport au polymère total P).